# EUROPÄISCHE PATENTSCHRIFT

(11) **EP 3 741 013 B1**
(45) Veröffentlichungstag und Bekanntmachung des Hinweises auf die Patenterteilung: **04.10.2023**
(21) Anmeldenummer: 19702533.1
(22) Anmeldetag: 17.01.2019
(51) Int. Cl.: H01S 3/00, H01S 3/10, H01S 3/13, H01S 3/23

(54) **VERFAHREN UND LASERSYSTEM ZUM ERZEUGEN VERSTÄRKTER PULSE ON DEMAND-AUSGANGSLASERPULSE**
METHOD AND LASER SYSTEM FOR GENERATING AMPLIFIED PULSE-ON-DEMAND OUTPUT LASER PULSES
PROCÉDÉ ET SYSTÈME LASER POUR GÉNÉRER DES IMPULSIONS LASER DE SORTIE SUR DEMANDE AMPLIFIÉES

(30) Priorität: 18.01.2018 DE 102018200811
(43) Veröffentlichungstag der Anmeldung: 25.11.2020
(73) Patentinhaber: TRUMPF Laser GmbH, 78713 Schramberg (DE)
(72) Erfinder: FLAIG, Rainer, 78664 Eschbronn (DE); RAPP, Stefan, 78713 Schramberg (DE); STIER, Fred, 18147 Rostock (DE)
(74) Vertreter: Kohler Schmid Möbus Patentanwälte
(86) Internationale Anmeldenummer: PCT/EP2019/051104
(87) Internationale Veröffentlichungsnummer: WO 2019/141757

(56) Entgegenhaltungen:
- DE-A1-102014 017 568
- DE-B3-102017 210 272
- US-A1- 2014 050 235

## Beschreibung

Die Erfindung betrifft ein Verfahren zum Erzeugen verstärkter Ausgangslaserpulse mit individuell vorgegebenen Pulsenergien zu individuell vorgegebenen Zeitpunkten an einem Ausgang, sowie auch ein zum Durchführen des Verfahrens geeignetes Lasersystem und ein zugehöriges Steuerungsprogrammprodukt.

Bekannte Kurzpulslasersysteme (fs..ps Pulsdauern) haben eine taktratenabhängige Laserpulsenergie bei konstanter Pumpleistung und werden in der Regel mit konstanter Frequenz betrieben. Der Anwender möchte die Laserpulse mit frei wählbarer Triggerung (ns-Jitter) und konstanter einstellbarer Pulsenergie betreiben (Pulse on Demand = POD).

Aus der DE 10 2014 017 568 A1 ist ein Verfahren zum Erzeugen verstärkter Ausgangslaserpulse zu individuell vorgegebenen Zeitpunkten bekannt, die durch freies Triggern mittels eines Pulspickers erzielt werden. Dazu wird ein Hochleistungs-ps-Laser verwendet, der aus einem modengekoppelten Seeder mit einer Pulswiederholrate von einigen 10 MHz, einem Pulspicker, einem Verstärker, einem Modulator und eventuell einer Frequenzkonversionseinheit besteht. Der Pulspicker besteht aus einem Modulator und einem Treiber, mit denen mindestens 3 Niveaus für unterschiedliche Pulsamplituden nach dem Pulspicker gemäß einer Vorgabe eingestellt werden können. In dem Fall, dass der zeitliche Abstand zweier angeforderter Pulse größer ist als der Kehrwert einer nominellen Pulswiederholrate, geht der Treiber auf ein Zwischenniveau über, so dass der Pulspicker Pulse mit einer vordefinierten und geringen Amplitude durchlässt, um die Verstärkung des Lasermediums für konstante Laserparameter zu konditionieren.

Daher liegt der vorliegenden Erfindung die Aufgabe zugrunde, ein schnelles energiestabilisiertes POD(Pulse on Demand)-Verfahren zum Erzeugen verstärkter Ausgangslaserpulse mit individuell vorgegebenen Pulsenergien zu individuell vorgegebenen Zeitpunkten sowie ein zugehöriges Lasersystem anzugeben.

Diese Aufgabe wird erfindungsgemäß gelöst durch ein Verfahren zum Erzeugen verstärkter Ausgangslaserpulse mit individuell vorgegebenen Pulsenergien zu individuell vorgegebenen Zeitpunkten an einem Ausgang, das die folgenden Verfahrensschritte umfasst:
- Bereitstellen einer Pulsfolge von Eingangslaserpulsen mit der gleichen Pulsenergie und insbesondere mit dem gleichen zeitlichen Pulsabstand, welcher kleiner als der zeitliche Pulsabstand zwischen zwei benachbarten Ausgangslaserpulsen ist;
- Auswählen derjenigen Eingangslaserpulse, die am Ausgang jeweils zu den vorgegebenen Zeitpunkten oder am nächsten zu den vorgegebenen Zeitpunkten ankommen;
- Verstärken der ausgewählten Eingangslaserpulse mittels eines optischen Verstärkers, der eine vorgegebene, verstärkungsfreie Mindestzeitspanne und eine vorgegebene, verstärkungsfreie Höchstzeitspanne aufweist,
- Einkoppeln eines in seiner Pulsenergie variablen Energiebilanzopferlaserpulses in einem zeitlichen Abstand von kleiner als die Höchstzeitspanne vor mindestens einem, insbesondere jedem, zu verstärkenden Eingangslaserpuls,
- für den Fall, dass der zeitliche Pulsabstand zwischen zwei aufeinanderfolgenden, zu verstärkenden Eingangslaserpulsen größer als die Höchstzeitspanne ist, vor dem nachfolgenden der beiden aufeinanderfolgenden, zu verstärkenden Eingangslaserpulse Einfügen mindestens eines Opferlaserpulses, der von dem nachfolgenden, zu verstärkenden Eingangspuls um höchstens die Höchstzeitspanne, insbesondere um die Höchstzeitspanne, beabstandet ist, in die Pulsfolge der ausgewählten Eingangslaserpulse, und
- Auskoppeln der verstärkten Opfer- und Energiebilanzopferlaserpulse vor dem Ausgang aus der Pulsfolge der verstärkten Eingangspulse, um am Ausgang die Ausgangslaserpulse zu den vorgegebenen Zeitpunkten zu erhalten,
wobei die Pulsenergie des Energiebilanzopferlaserpulses in Abhängigkeit des zeitlichen Abstands des dem Energiebilanzopferlaserpuls unmittelbar nachfolgenden, zu verstärkenden Eingangslaserpulses zu dem unmittelbar vorhergehenden, zu verstärkenden Eingangslaserpuls oder Opferlaserpuls gewählt wird, um am Ausgang die Ausgangslaserpulse mit den vorgegebenen Pulsenergien zu erhalten.

Bevorzugt weisen alle verstärkten Ausgangslaserpulse die gleiche Pulsenergie auf.

Vorzugsweise ist die Pulsenergie der Opferlaserpulse gleich der Pulsenergie der zu verstärkenden Eingangslaserpulse.

Die Erfindung beruht auf der Tatsache, dass nach einem Puls die Inversion im Verstärkungsmedium des Verstärkers erst wieder aufgebaut werden muss, um eine Puls-zu-Puls-Stabilität zu gewährleisten. Außerdem wird bei zu langen Pulspausen die Verstärkung so groß, dass sich Pulsüberhöhungen einstellen.

Wesentliche Bausteine der Erfindung sind Lasertaktaufbereitung und Pulsenergiekorrektur.

Die Lasertaktaufbereitung hat die Aufgabe, den Grundtakt in einem für das Lasersystem sicheren Frequenzbereich zu halten und Pulsanforderungen (Pulstriggerungen) durch den Anwender ns-genau "einzutakten". Zum anderen wird geschaut, ob die Pulsanforderung außerhalb eines vorgegebenen Zeitfensters liegt, welches durch das Verhalten des Verstärkungsmediums gegeben ist. Ist der Pulsabstand zu lang, wird ein Zwischenpuls (Opferlaserpuls) eingefügt, der dann auf einen Absorber gelenkt wird.

Die Pulsenergiekorrektur der verstärkten Ausgangspulse auf die vorgegebenen Pulsenergien erfolgt durch zeitgesteuertes Einkoppeln eines in seiner Pulsenergie variablen Vorpulses (Energiebilanzopferlaserpuls) in Abhängigkeit ihrer bekannten Pulsabstände zum jeweils unmittelbar vorhergehenden Eingangs- oder Opferlaserpuls. Je größer dieser Pulsabstand eines Eingangslaserpulses oder eines Opferlaserpuls ist, desto größer ist die im Verstärker aufgebaute Inversion und desto größer ist die Pulsenergie des verstärkten Eingangslaserpulses. In Abhängigkeit des bekannten Pulsabstandes zum jeweils unmittelbar vorhergehenden, verstärkten Eingangs- oder Opferlaserpuls wird die Pulsenergie des Energiebilanzopferlaserpulses eingestellt, um Ausgangslaserpulse mit der vorgegebenen Pulsenergie zu erhalten.

Das erfindungsgemäße Verfahren funktioniert allein durch die gezielte zeitliche Ansteuerung der ausgewählten Eingangspulse und Opfer- bzw. Energiebilanzopferlaserpulse. Dieses Vorgehen ist schneller als eine Pulsenergie-Regelung der Ausgangslaserpulse. Bevorzugt wird mit konstanter Pumpleistung für den Verstärker gearbeitet, so dass ein hohes thermisches Gleichgewicht und eine zeitlich nahezu konstante thermische Linse erreicht werden und dadurch die Funktion der optischen Komponenten verbessert wird.

Vorzugsweise wird für die ausgewählten Eingangslaserpulse die zu erwartende Pulsenergie der verstärkten Ausgangslaserpulse im Voraus bestimmt und die Pulsenergie der Energiebilanzopferlaserpulse anhand eines Vergleichs der zu erwartenden Pulsenergie und der vorgegebenen Pulsenergie gesteuert. Beispielsweise kann die erwartete Pulsenergie aus dem simulierten Verhalten des Verstärkers in Abhängigkeit von Pulsabstand und Pulsenergie der ausgewählten Eingangslaserpulse und der Pumpleistung des Verstärkers bestimmt werden. Diese Simulation kann über ein nichtlineares Modell erfolgen, welches eine Funktion vom Pulsabstand, von der Pulsenergie der ausgewählten Eingangslaserpulse, von der Leistung der zu verstärkenden Pulse und der Pumpleistung ist.

Sofern der zeitliche Pulsabstand eines ausgewählten Eingangslaserpulses zu dem unmittelbar vorhergehenden, ausgewählten Eingangslaserpuls kleiner als die Mindestzeitspanne ist, wird bevorzugt stattdessen ein anderer Eingangslaserpuls ausgewählt, dessen zeitlicher Pulsabstand zu dem unmittelbar vorhergehenden, ausgewählten Eingangslaserpuls gleich oder nächstkommend größer als die Mindestzeitspanne ist. Beispielsweise kann dem eigentlichen Auswahlsignal ein Verzögerungssignal überlagert und ein Eingangslaserpuls ausgewählt werden, dessen zeitlicher Pulsabstand gleich oder nächstkommend größer als die Mindestzeitspanne ist. Vorzugsweise werden alle die Eingangslaserpulse auswählenden Triggersignale mit einer Verzögerung beaufschlagt, so dass die Mindestzeitspanne für alle Triggersignale eingehalten wird und ggf. Opferlaserpulse eingeführt werden können. D.h., alle ausgewählten Eingangslaserpulse sind mit einem festen Delay beaufschlagt. Die Mindestzeitspanne ist mindestens so lang, dass eine Bewertung, ob Opfer- und/oder Energiebilanzopferlaserpulse erforderlich sind, durchgeführt werden kann.

Als Energiebilanzopferlaserpuls kann einer in seiner Pulsenergie beschnittener Eingangslaserpuls oder ein Fremdlaserpuls, der insbesondere eine andere Wellenlänge als die Wellenlänge der Eingangslaserpulse aufweist, in die Pulsfolge der ausgewählten Eingangslaserpulse eingefügt werden.

Als Opferlaserpuls kann einer der Eingangslaserpulse oder alternativ ein Fremdlaserpuls, der insbesondere eine andere Wellenlänge als die Wellenlänge der Eingangslaserpulse aufweist, in die Pulsfolge der ausgewählten Eingangslaserpulse eingefügt werden.

Vorzugsweise ist der zeitliche Pulsabstand zwischen zwei benachbarten Ausgangslaserpulsen um mindestens eine Größenordnung größer als der zeitliche Pulsabstand der Eingangslaserpulse. Die Taktfrequenz der Eingangslaserpulse liegt beispielsweise im Frequenzbereich von z.B 10 MHz bis 200 MHz.

Um Überhöhungen am ersten Ausgangslaserpuls einer angeforderten Pulsfolge zu verhindern, kann vorteilhaft vor dem ersten ausgewählten Eingangslaserpuls mindestens ein Opfer- und/oder Energiebilanzopferlaserpuls in die Pulsfolge der ausgewählten Eingangslaserpulse eingefügt werden.

Bevorzugt wird vor jedem zu verstärkenden Eingangslaserpuls ein Energiebilanzopferlaserpuls in den Verstärker gekoppelt. Das Auskoppeln der verstärkten Opfer- und Energiebilanzopferlaserpulse kann entweder an unterschiedlichen Auskoppeleinheiten oder, was bevorzugt ist, an derselben Auskoppeleinheit erfolgen.

Für einen stabilen Laserbetrieb ist die Höchstzeitspanne bevorzugt ein Vielfaches der Mindestzeitspanne, vorzugsweise doppelt so lang wie die Mindestzeitspanne.

In einer weiteren Ausführungsform werden aus mehreren ausgewählten, äquidistanten Eingangslaserpulsen Bursts erzeugt und zwischen zwei Bursts einer Burstfolge ein Energiebilanzopferburst und ggf. ein Opferburst eingefügt, die vorteilhaft jeweils die gleiche Anzahl an Laserpulsen und den gleichen Pulsabstand wie im eigentlichen Burst aufweisen, um dadurch die Stabilität des Lasersystems zu verbessern. Wird der Abstand Tₘₐₓ zwischen zwei Bursts einer Burstfolge überschritten, wird ein Opferburst mit dem gleichen äquidistanten Zwischenpulsabstand wie die einzelnen Eingangslaserpulse der Bursts eingefügt. Vorzugsweise entspricht die Anzahl der Pulse eines Opferbursts der Anzahl der Pulse eines Eingangsbursts und die Anzahl der Pulse eines Energiebilanzopferbursts der Anzahl der Pulse eines Eingangsbursts.

Die Erfindung betrifft auch ein Lasersystem zum Erzeugen verstärkter Ausgangslaserpulse mit individuell vorgegebenen Pulsenergien zu individuell vorgegebenen Zeitpunkten an einem Ausgang, mit einer Pulslaserquelle zum Erzeugen von Eingangslaserpulsen mit der gleichen Pulsenergie und insbesondere dem gleichen zeitlichen Pulsabstand, welcher kleiner als der zeitliche Pulsabstand zwischen zwei benachbarten Ausgangslaserpulsen ist, mit einer Auswahleinheit zum Auswählen einiger der Eingangslaserpulse, mit einem optischen Verstärker zum Verstärken der ausgewählten Eingangslaserpulse, mit einer optischen Auskoppeleinheit zum Auskoppeln zumindest eines Teils der verstärkten Laserpulse und mit einer Steuereinheit, die programmiert ist, die Auswahl- und Auskoppeleinheiten gemäß dem oben beschriebenen Verfahren zeitlich anzusteuern.

Vorzugsweise weist das Lasersystem eine Fremdpulsquelle (z.B. eine gepulste Diode, eine cw Diode mit optischem Schalter (z.B. AOM) oder eine Diode mit Faserverstärker), insbesondere mit einer anderen Wellenlänge als die Pulsquelle, zum Erzeugen eines in die Pulsfolge der ausgewählten Eingangslaserpulse einzufügenden Opfer- und/oder Energiebilanzopferpulses auf. Im Fall einer Fremdpulsquelle kann der Auskoppeleinheit ein wellenlängenselektives Element (z.B. dichroitischer Spiegel, diffraktives Element, VBG [Volume Bragg Grating]) zum Auskoppeln des Opferlaserpulses vorgeordnet oder nachgeordnet sein.

Die Erfindung betrifft schließlich auch ein Steuerungsprogrammprodukt, welches Codemittel aufweist, die zum Durchführen aller Schritte des oben beschriebenen Verfahrens angepasst sind, wenn das Programm auf einer Steuereinheit eines Lasersystems abläuft.

Weitere Vorteile und vorteilhafte Ausgestaltungen des Gegenstands der Erfindung ergeben sich aus der Beschreibung, den Ansprüchen und der Zeichnung. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: schematisch eine erste Ausführungsform eines Lasersystems zum Erzeugen identischer, verstärkter Ausgangslaserpulse mittels eingefügter Opfer- und Energiebilanzopferlaserpulse;
- Fig. 2: schematisch eine zweite Ausführungsform eines Lasersystems zum Erzeugen identischer, verstärkter Ausgangslaserpulse mittels eingefügter Opfer- und Energiebilanzopferlaserpulse;
- Fign. 3a, 3b: unterschiedlich hohe Pulsenergien von eingefügten Energiebilanzopferlaserpulsen; und
- Fig. 4: schematisch eine dritte Ausführungsform des erfindungsgemäßen Lasersystems zum Erzeugen identischer, verstärkter Ausgangsburstpulse mittels eingefügter Opfer- und Energiebilanzopferlaserpulse.

In der folgenden Beschreibung der Zeichnung werden für gleiche bzw. funktionsgleiche Bauteile identische Bezugszeichen verwendet.

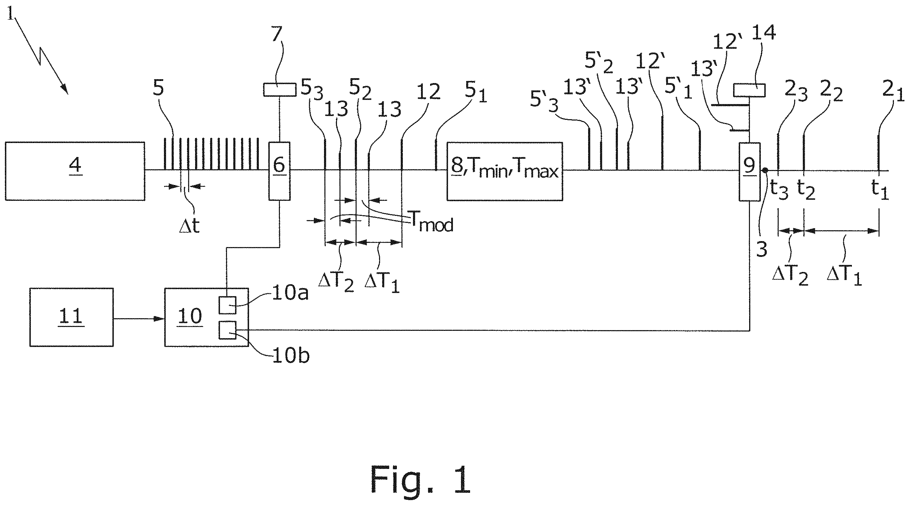

Das in **Fig. 1** gezeigte Lasersystem **1** dient zum Erzeugen mehrerer (hier lediglich beispielhaft dreier) verstärkter Ausgangslaserpulse **2₁**, **2₂**, **2₃** mit individuell vorgegebenen Pulsenergien zu individuell vorgegebenen Zeitpunkten (Pulse on Demand = POD) an einem Ausgang **3**.

Das Lasersystem 1 umfasst eine Pulsquelle **4** zum Bereitstellen einer Pulsfolge von Eingangslaserpulsen **5** mit der gleichen Pulsenergie und dem gleichen zeitlichen Pulsabstand **Δt**, welcher um Größenordnungen kleiner ist als der zeitliche Pulsabstand **ΔT₁**, **ΔT₂** zwischen zwei benachbarten Ausgangslaserpulsen 2₁, 2₂, 2₃. Die Taktfrequenz der Eingangslaserpulse 5 ist fest eingestellt und liegt in einem Frequenzbereich von z.B.10 MHz bis 200 MHz. Es können auch andere gepulste Quellen zum Einsatz kommen, welche keine äquidistanten Pulse erzeugen, beispielsweise ps-Laserdioden.

Das Lasersystem 1 umfasst eine optische Auswahleinrichtung (Pulspicker) **6**, z.B. in Form eines eingangsseitigen AOM (akusto-optischer Modulator) oder EOM (elektro-optischer Modulator), zum gezielten Auswählen bzw. Durchlassen einiger der Eingangslaserpulse 5. Die ausgewählten Eingangslaserpulse **5₁**, **5₂**, **5₃** werden vom Pulspicker 6 unabgelenkt durchgelassen, während die nicht ausgewählten Eingangslaserpulse 5 ausgekoppelt und auf einen Absorber **7** gelenkt werden.

Das Lasersystem 1 umfasst weiterhin einen optischen Verstärker **8** zum Verstärken der ausgewählten Eingangslaserpulse 5₁, 5₂, 5₃, sowie eine optische Auskoppeleinheit (Auskoppler) **9**, z.B. in Form eines ausgangsseitigen AOM oder EOM, zum Auskoppeln von verstärkten Eingangslaserpulsen **5₁'**, **5₂'**, **5₃'**. Dabei weist der Verstärker 8 eine verstärkungsfreie Mindestzeitspanne **Tₘᵢₙ**, die durch den für eine Mindestverstärkung im optischen Verstärker 8 erforderlichen Inversionsaufbau vorgegeben ist, und eine Höchstzeitspanne **Tₘₐₓ**, die durch den für eine zulässige Höchstverstärkung im optischen Verstärker 8 erforderlichen Inversionsaufbau vorgegeben ist, auf. Die Mindestzeitspanne Tₘᵢₙ beruht auf der Tatsache, dass nach einer Pulsverstärkung die Inversion im Verstärkungsmedium des Verstärkers 8 erst wieder aufgebaut werden muss, um eine Puls-zu-Puls-Stabilität zu gewährleisten. Die Höchstzeitspanne Tₘₐₓ verhindert zu lange Pulspausen und somit zu große Verstärkungen, die zu unerwünschten Pulsüberhöhungen führen (z.B. zu Pulsüberhöhungen, welche die optischen Elemente des Verstärkers 8 beschädigten könnten, oder zu nichtlinearen Prozessen im aktiven Medium, welche Pulsformänderungen hervorrufen oder thermische Effekte an den optischen Elemente des Verstärkers 8 verursachen). Die verstärkten Eingangslaserpulse 5₁', 5₂', 5₃' kommen am Ausgang 3 zu den Zeitpunkten **t₁**, **t₂**, **t₃** als verstärkte Ausgangslaserpulse 2₁, 2₂, 2₃ an. Bevorzugt ist die die Höchstzeitspanne Tₘₐₓ ein Vielfaches von Tₘᵢₙ, und besonders bevorzugt ist Tₘₐₓ=2*Tₘᵢₙ.

Das Lasersystem 1 umfasst ferner eine Steuereinheit **10**, die den Pulspicker 6, den Auskoppler 9 und zumindest bei Verwendung einer Pulsquelle 4 mit nichtäquidistanter Pulserzeugung auch die Pulserzeugung der Pulsquelle 4 entsprechend einer Anwenderanforderung **11** zeitlich ansteuert, welche am Ausgang 3 zu individuell einstellbaren Zeitpunkten verstärkte Ausgangslaserpulse mit individuell einstellbarer Pulsenergie anfordert. Die Steuereinheit 10 kann auch die Pumpleistung des Verstärkers 8 steuern, welche konstant sein soll.

Im Folgenden wird die Funktionsweise des Lasersystems 1 für den Fall beschrieben, dass von der Anwenderanforderung 11 drei verstärkte Ausgangslaserpulse 2₁, 2₂, 2₃ mit der gleichen Pulsenergie zu den Zeitpunkten t₁, t₂, t₃ am Ausgang 3 angefordert werden. Dabei sei angenommen, dass der zeitliche Pulsabstand ΔT₁ zwischen dem ersten und dem zweiten Ausgangslaserpuls 2₁, 2₂ größer als die Höchstzeitspanne Tₘₐₓ ist (ΔT₁ > Tₘₐₓ) und dass der zeitliche Pulsabstand ΔT₂ zwischen dem zweiten und dem dritten Ausgangslaserpuls 2₂, 2s kleiner als die Höchstzeitspanne Tₘₐₓ, aber größer als die Mindestzeitspanne Tₘᵢₙ ist (Tₘᵢₙ < ΔT₂ < Tmax).

Die Steuereinheit 10 steuert den Pulspicker 6 zeitlich derart an, dass aus den Eingangslaserpulsen 5 nur diejenigen drei durchgelassen werden, die am Ausgang 3 zu den jeweils angeforderten Zeitpunkten t₁, t₂, t₃ ankommen. Da der Pulsabstand ΔT₁ zwischen dem ersten und dem zweiten zu verstärkenden Eingangslaserpuls 5₁, 5₂ größer als die Höchstzeitspanne Tₘₐₓ ist, wird von der Steuereinheit 10 in die Pulsfolge der ausgewählten Eingangslaserpulse 5₁, 5₂, 5₃ vor dem zweiten zu verstärkenden Eingangslaserpulse 5₂ ein Opferlaserpuls **12** eingefügt, der von dem zweiten zu verstärkenden Eingangspuls 5₂ um mindestens die Mindestzeitspanne Tₘᵢₙ und um höchstens die Höchstzeitspanne Tₘₐₓ, bevorzugt um die Höchstzeitspanne Tₘₐₓ, beabstandet ist. Dazu wird der Pulspicker 6 von der Steuereinheit 10 zeitlich angesteuert, um einen weiteren der Eingangslaserpulse 5 als Opferlaserpuls 12 durchzulassen. Zusätzlich wird ein Energiebilanzopferlaserpuls **13** in einem zeitlichen Abstand **T_{mod}** vor dem Eingangslaserpuls 5₂ eingekoppelt, wobei T_{mod} kleiner als die Höchstzeitspanne Tₘₐₓ und größer oder gleich der Umschaltzeit des Auskopplers 9 ist. Da der Abstand zwischen dem zu verstärkenden Eingangslaserpulsen 5₂ und 5₃ kleiner als Tₘₐₓ ist, wird hier nur ein Energiebilanzopferlaserpuls 13 mit angepasster Pulsenergie im zeitlichen Abstand T_{mod} vor dem Eingangslaserpuls 5₃ eingekoppelt. Der Energiebilanzopferlaserpuls 13 kann durch entsprechendes Ansteuern des Pulspickers 6 in seiner Pulsenergie beschnitten werden. Alle anderen Eingangslaserpulse 5 werden vom Pulspicker 6 auf den Absorber 7 gelenkt.

Die drei ausgewählten Eingangslaserpulse 5₁, 5₂, 5₃, der Opferlaserpuls 12 sowie die Energiebilanzopferlaserpulse 13 werden mittels des optischen Verstärkers 8 zu den verstärkten Laserpulsen 5₁', 5₂', 5₃', **12'**, **13'** verstärkt. Sofern sein Pulsabstand zum vorhergehenden Puls größer als die Höchstzeitspanne Tₘₐₓ ist, ist der verstärkte Opferlaserpuls 12', wie in Fig. 1 gezeigt, größer als die Pulse 5₁', 5₂', 5₃', da er eine größere Verstärkung erfährt. Der Auskoppler 9 wird von der Steuereinheit 10 zeitlich derart angesteuert, dass der verstärkte Opferlaserpuls 12' und die Energiebilanzopferlaserpulse 13' ausgekoppelt und auf einen Absorber **14** gelenkt werden und nur die drei verstärkten Eingangslaserpulse 5'₁, 5'₂, 5'₃ ausgekoppelt werden. Da T_{mod} größer oder gleich der Umschaltzeit des Auskopplers 9 ist, können die Energiebilanzopferlaserpulse 13' unabhängig von den nachfolgenden verstärkten Laserpulsen 5₂', 5₃'ausgekoppelt werden. Die drei verstärkten Ausgangslaserpulse 2₁, 2₂, 2₃ mit der gleichen Pulsenergie kommen zu den Zeitpunkten t₁, t₂, t₃ am Ausgang 3 an.

Werden am Ausgang 3 Ausgangslaserpulse 2₁, 2₂, 2₃ mit unterschiedlichen Pulsenergien oder -formen angefordert, erfolgt in einer nicht unter die Erfindung fallenden Alternative eine entsprechende Energiereduzierung am Auskoppler 9 durch zeitgesteuertes Teilauskoppeln der verstärkten Eingangslaserpulse 5'₁, 5'₂, 5'₃ in Abhängigkeit ihrer bekannten Pulsabstände zum jeweils unmittelbar vorhergehenden, verstärkten Eingangs-, Opfer- oder Energiebilanzopferlaserpuls 5'₁, 5'₂, 5'₃, 12', 13'. Alternativ kann erfindungsgemäß die Pulsenergie der Energiebilanzopferlaserpulse 13 angepasst werden, um Ausgangslaserpulse 2 mit unterschiedlichen Pulsenergien zu erhalten.

Ist der Pulsabstand eines angeforderten Verstärkerpulses zum unmittelbar vorhergehenden Verstärkerpuls kleiner als die Mindestzeitspanne Tₘᵢₙ, so wird statt des eigentlich auszuwählenden Eingangslaserpulses ein anderer Eingangslaserpuls ausgewählt, dessen zeitlicher Pulsabstand zu dem unmittelbar vorhergehenden, ausgewählten Eingangslaserpuls gleich oder nächstkommend größer als die Mindestzeitspanne Tₘᵢₙ ist. Der Pulspicker 6 wird also zeitverzögert angesteuert, indem beispielsweise dem eigentlichen Auswahlsignal ein Verzögerungssignal überlagert wird und ein Eingangslaserpuls ausgewählt wird, dessen zeitlicher Pulsabstand gleich oder nächstkommend größer als die Mindestzeitspanne Tₘᵢₙ ist. Vorzugsweise werden alle die Eingangslaserpulse auswählenden, elektrischen Triggersignale von der Anwenderanforderung 11 mit einer Verzögerung Tₘᵢₙ beaufschlagt, so dass die Mindestzeitspanne Tₘᵢₙ für alle Triggersignale eingehalten wird und ggf. Opferlaserpulse eingeführt werden können. D.h., alle Eingangslaserpulse sind mit einem festen Delay beaufschlagt. Die Mindestzeitspanne Tₘᵢₙ ist mindestens so lang, dass von der Steuereinheit 10 eine Bewertung, ob Opfer- und Energiebilanzopferlaserpulse 12, 13 erforderlich sind, durchgeführt werden kann.

Die Steuereinheit 10 kann eine Vergleichseinheit **10a** aufweisen, welche die Pulsabstände ΔT₁, ΔT₂ der ausgewählten Eingangslaserpulse 5₁, 5₂, 5₃ mit der vorgegebenen Höchstzeitspanne Tₘₐₓ vergleicht und bei zu großem Pulsabstand ein Steuersignal an den Pulspicker 6 ausgibt, um einen Opferlaserpuls 12 und/oder einen Energiebilanzopferlaserpuls 13 in die Pulsfolge der ausgewählten Eingangslaserpulse 5₁, 5₂, 5₃ einzufügen. Die Steuereinheit 10 kann weiterhin eine Bestimmungs- und Vergleichseinheit **10b** aufweisen, die für die ausgewählten Eingangslaserpulse 5₁, 5₂, 5₃ die zu erwartende Pulsenergie der verstärkten Ausgangslaserpulse 2₁, 2₂, 2₃ im Voraus bestimmt und mit der vorgegebenen Pulsenergie vergleicht und ein Steuersignal an den Pulspicker 6 ausgibt, um einen Energiebilanzopferlaserpuls 13 mit angepasster Pulsenergie in die Pulsfolge der ausgewählten Eingangspulse 5₁, 5₂, 5₃.einzufügen, um so einen Ausgangslaserpuls 2₁, 2₂, 2₃ mit der vorgegebenen Pulsenergie auszukoppeln.

Es ist vorteilhaft, die Pulsenergien der Opferlaserpulse 12 gleich der Pulsenergie der zu verstärkenden Eingangslaserpulse 5 zu wählen.

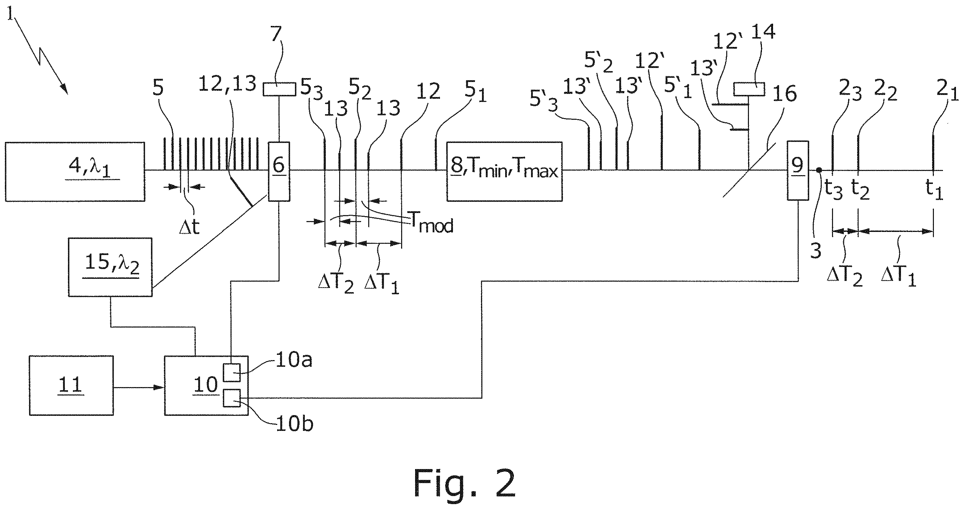

Vom Lasersystem der Fig. 1 unterscheidet sich das in **Fig. 2** gezeigte Lasersystem 1 dadurch, dass hier der Opferlaserpuls 12 und/oder der Energiebilanzopferlaserpuls 13 von einer von der Steuereinheit 10 angesteuerten Fremdpulsquelle (z.B. Laserdiode) **15** erzeugt werden. Der Opferlaserpuls 12 und/oder der Energiebilanzopferlaserpuls 13 können die gleiche Wellenlänge **λ₁** wie die Eingangslaserpulse 5 oder aber wie in Fig. 2 eine andere Wellenlänge **λ₂** aufweisen. Der Opferlaserpuls 12 und/oder der Energiebilanzopferlaserpuls 13 werden von der Steuereinheit 10 in die Pulsfolge der ausgewählten Eingangslaserpulse 5₁, 5₂, 5₃ eingefügt, und der verstärkte Opferlaserpuls 12' und/oder der verstärkte Energiebilanzopferlaserpuls 13' werden von einem dem Auskoppler 9 vorgeordneten wellenlängenselektiven Element **16** (z.B. dichroitischer Spiegel, diffraktives Element, VBG[Volume Bragg Grating]) ausgekoppelt und auf den Absorber 14 gelenkt. Anders als in Fig. 2 gezeigt, können der verstärkte Opferlaserpuls 12' und/oder der verstärkte Energiebilanzopferlaserpuls 13' auch mit einem der Pulse 5₁', 5₂', 5₃' überlappen.

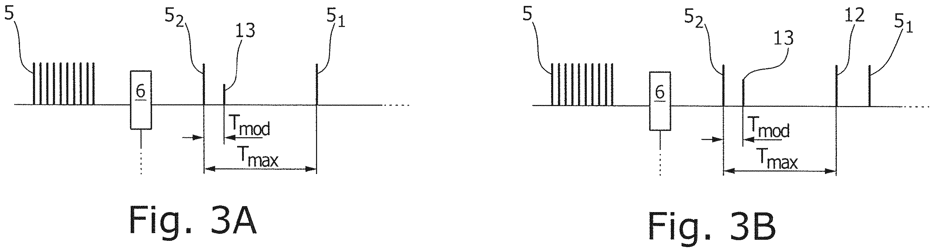

Wie in **Fign. 3A, 3B** gezeigt, wird der Energiebilanzopferlaserpuls 13 - abhängig davon, wie weit er von dem vorhergehenden, hier dem ersten, zu verstärkenden Eingangspuls 5₁ beabstandet ist - in der Pulsenergie angepasst. In Fig. 3B ist der Energiebilanzopferlaserpuls 13 von dem ersten, zu verstärkenden Eingangspuls 5₁ weiter beanstandet als in Fig. 3A, so dass zum Abräumen der im Verstärkungsmedium des Verstärkers 8 seit der Verstärkung des ersten Eingangspulses 5₁ aufgebauten Inversion eine höhere Energiebilanzopferlaserpulsenergie für die in Fig. 3B aufgebaute höhere Inversion als für die in Fig. 3A aufgebaute geringere Inversion erforderlich ist. Ist der Abstand zwischen zwei zu verstärkenden Eingangspulse 5₁ und 5₂ größer als Tₘₐₓ (Fig. 3B), wird zusätzlich zum Energiebilanzopferlaserpuls 13 noch ein Opferlaserpuls 12 in die Pulsfolge eingefügt.

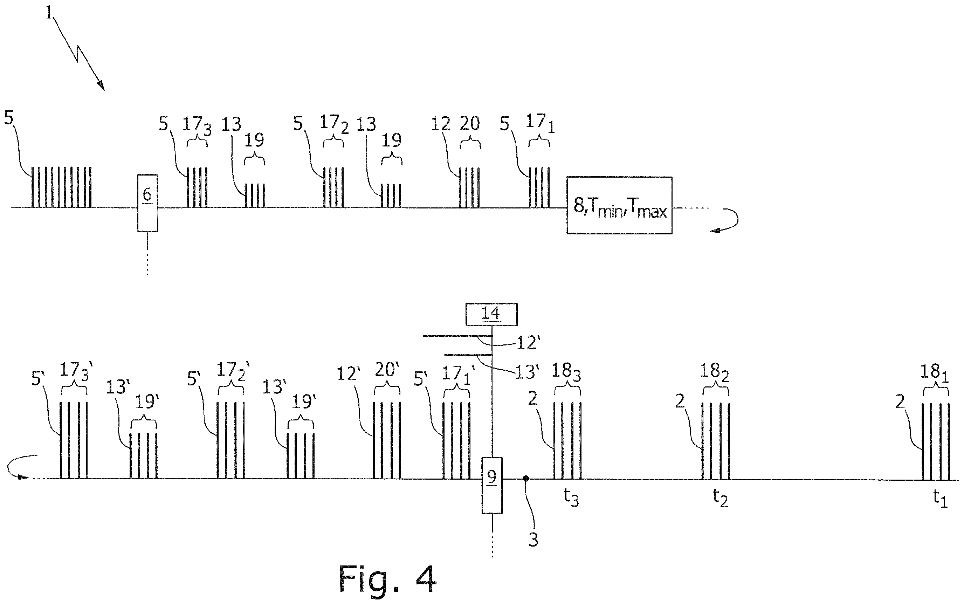

Von Fig. 1 unterscheidet sich das in **Fig. 4** gezeigte Lasersystem 1 dadurch, dass hier mittels des Pulspickers 6 anstelle von einzelnen Eingangslaserpulsen identische Pulspakete (Burstpulse) **17₁, 17₂, 17₃,** jeweils bestehend aus mehreren, hier vier, äquidistanten Eingangslaserpulsen 5, ausgewählt werden, die dann im Verstärker 8 zu Ausgangsburstpulsen **18₁**, **18₂**, **18₃** verstärkt werden. Zwischen die Burstpulse 17₁, 17₂, 17₃ sind jeweils ein Energiebilanzopferburst **19**, jeweils bestehend aus mehreren, hier vier Energiebilanzopferpulse 13 mit dem gleichen äquidistanten Zwischenpulsabstand wie die einzelnen Eingangslaserpulse 5 der Burstpulse 17₁, 17₂, 17₃ eingefügt, um die Stabilität des Lasersystems 1 zu verbessern.

Da der Pulsabstand ΔT₁ zwischen dem ersten und dem zweiten zu verstärkenden Burstpulse 17₁, 17₂ größer als die Höchstzeitspanne Tₘₐₓ ist, wird von der Steuereinheit 10 vor dem zweiten zu verstärkenden Burstpulse 17₂ ein Opferpulsburst **20**, jeweils bestehend aus mehreren, hier vier Opferlaserpulsen 12 mit dem gleichen äquidistanten Zwischenpulsabstand wie die einzelnen Eingangslaserpulse 5 der Burstpulse 17₁, 17₂, 17₃ eingefügt. Dieser Opferpulsburst 20 ist von dem zweiten zu verstärkenden Burstpulse 17₂ um mindestens die Mindestzeitspanne Tₘᵢₙ, aber um höchstens die Höchstzeitspanne Tₘₐₓ beabstandet. Die verstärkten Opfer- und Energiebilanzopferbursts 19, 20 werden vom Auskoppler 9 ausgekoppelt und auf den Absorber 14 gelenkt.

Die beschriebenen Verfahren funktionieren allein durch die zeitliche Ansteuerung des Pulspickers 6 und des Auskopplers 9 durch die Steuereinheit 10, d.h., es wird nicht geregelt.

Den gezeigten Lasersystemen 1 können noch eine Regelung der Pumpleistung und eine Regelung der Pulsenergie der Eingangslaserpulse 5 überlagert sein.

## Patentansprüche

1. Verfahren zum Erzeugen verstärkter Ausgangslaserpulse (2₁, 2₂, 2₃) mit individuell vorgegebenen Pulsenergien zu individuell vorgegebenen Zeitpunkten (t₁, t₂, t₃) an einem Ausgang (3), mit folgenden Verfahrensschritten:
- Bereitstellen einer Pulsfolge von Eingangslaserpulsen (5) mit der gleichen Pulsenergie und insbesondere mit dem gleichen zeitlichen Pulsabstand (Δt), welcher kleiner als der zeitliche Pulsabstand (ΔT₁, ΔT₂) zwischen zwei benachbarten Ausgangslaserpulsen (2₁, 2₂, 2₃) ist;
- Auswählen derjenigen Eingangslaserpulse (5₁, 5₂, 5₃), die am Ausgang (3) jeweils zu den vorgegebenen Zeitpunkten (t₁, t₂, t₃) oder am nächsten zu den vorgegebenen Zeitpunkten (t₁, t₂, t₃) ankommen;
- Verstärken der ausgewählten Eingangslaserpulse (5₁, 5₂, 5₃) mittels eines optischen Verstärkers (8), der eine vorgegebene, verstärkungsfreie Mindestzeitspanne (Tₘᵢₙ) und eine vorgegebene, verstärkungsfreie Höchstzeitspanne (Tₘₐₓ) aufweist,
- Einkoppeln eines in seiner Pulsenergie variablen Energiebilanzopferlaserpulses (13) in einem zeitlichen Abstand (T_{mod}) von kleiner als die Höchstzeitspanne (Tₘₐₓ) vor mindestens einem, insbesondere jedem, zu verstärkenden Eingangslaserpuls (5₁, 5₂, 5₃),
- für den Fall, dass der zeitliche Pulsabstand (ΔT₁) zwischen zwei aufeinanderfolgenden, zu verstärkenden Eingangslaserpulsen (5₁, 5₂) größer als die Höchstzeitspanne (Tₘₐₓ) ist, vor dem nachfolgenden der beiden aufeinanderfolgenden, zu verstärkenden Eingangslaserpulse (5₁, 5₂) Einfügen mindestens eines Opferlaserpulses (12), der von dem nachfolgenden, zu verstärkenden Eingangspuls (5₂) um höchstens die Höchstzeitspanne (Tₘₐₓ), insbesondere um die Höchstzeitspanne (Tₘₐₓ), beabstandet ist, in die Pulsfolge der ausgewählten Eingangslaserpulse (5₁, 5₂, 5₃); und
- Auskoppeln der verstärkten Opfer- und Energiebilanzopferlaserpulse (12', 13') vor dem Ausgang (3) aus der Pulsfolge der verstärkten Eingangslaserpulse (5'₁, 5'₂, 5'₃), um am Ausgang (3) die Ausgangslaserpulse (2₁, 2₂, 2₃) zu den vorgegebenen Zeitpunkten (t₁, t₂, t₃) zu erhalten, wobei die Pulsenergie des Energiebilanzopferlaserpulses (13) in Abhängigkeit des zeitlichen Abstands des dem Energiebilanzopferlaserpuls (13) unmittelbar nachfolgenden, zu verstärkenden Eingangslaserpulses (5₃, 5₂) zu dem unmittelbar vorhergehenden, zu verstärkenden Eingangslaserpuls (5₂) oder Opferlaserpuls (12) gewählt wird, um am Ausgang (3) die Ausgangslaserpulse (2₁, 2₂, 2₃) mit den vorgegebenen Pulsenergien zu erhalten.

2. Verfahren nach Anspruch 1, **dadurch gekennzeichnet, dass** für die ausgewählten Eingangslaserpulse (5₁, 5₂, 5₃) die zu erwartende Pulsenergie der verstärkten Ausgangslaserpulse (2₁, 2₂, 2₃) im Voraus bestimmt wird und die Pulsenergie der Energiebilanzopferlaserpulse (13) anhand eines Vergleichs der zu erwartenden Pulsenergie und der vorgegebenen Pulsenergie gesteuert wird.

3. Verfahren nach Anspruch 2, **dadurch gekennzeichnet, dass** die erwartete Pulsenergie aus dem simulierten Verhalten des Verstärkers (10) in Abhängigkeit von Pulsabstand und Pulsenergie der ausgewählten Eingangslaserpulse (5₁, 5₂, 5₃) und einer Pumpleistung des Verstärkers (8) bestimmt wird.

4. Verfahren nach einem der vorhergehenden Ansprüche, **dadurch gekennzeichnet, dass** alle verstärkten Ausgangslaserpulse (2₁, 2₂, 2₃) die gleiche Pulsenergie aufweisen.

5. Verfahren nach einem der vorhergehenden Ansprüche, **dadurch gekennzeichnet, dass** statt eines ausgewählten Eingangslaserpulses (5), dessen zeitlicher Pulsabstand zu dem unmittelbar vorhergehenden, ausgewählten Eingangslaserpuls kleiner als die Mindestzeitspanne (Tₘᵢₙ) ist, ein anderer Eingangslaserpuls (5) ausgewählt wird, dessen zeitlicher Pulsabstand zu dem unmittelbar vorhergehenden, ausgewählten Eingangslaserpuls (5) gleich oder nächstkommend größer als die Mindestzeitspanne (Tₘᵢₙ) ist.

6. Verfahren nach einem der vorhergehenden Ansprüche, **dadurch gekennzeichnet, dass** als Opfer- und/oder Energiebilanzopferlaserpuls (12, 13) einer der Eingangslaserpulse (5) in die Pulsfolge der ausgewählten Eingangslaserpulse (5₁, 5₂, 5₃) eingefügt wird.

7. Verfahren nach einem der Ansprüche 1 bis 5, **dadurch gekennzeichnet, dass** als Opfer- und/oder Energiebilanzopferlaserpuls (12, 13) ein Fremdlaserpuls, der insbesondere eine andere Wellenlänge (λ₂) als die Wellenlänge (λ₁) der Eingangslaserpulse (5) aufweist, in die Pulsfolge der ausgewählten Eingangslaserpulse (5₁, 5₂, 5₃) eingefügt wird.

8. Verfahren nach einem der vorhergehenden Ansprüche, **dadurch gekennzeichnet, dass** der zeitliche Pulsabstand (ΔT₁, ΔT₂) zwischen zwei benachbarten Ausgangslaserpulsen (2₁, 2₂, 2₃) um mindestens eine Größenordnung größer als der zeitliche Pulsabstand (ΔT) der Eingangslaserpulse (5) ist.

9. Verfahren nach einem der vorhergehenden Ansprüche, **dadurch gekennzeichnet, dass** vor dem ersten ausgewählten Eingangslaserpuls (5₁) mindestens ein Opferlaserpuls (12, 15) in die Pulsfolge der ausgewählten Eingangslaserpulse (5₁, 5₂, 5₃) eingefügt wird.

10. Verfahren nach einem der vorhergehenden Ansprüche, **dadurch gekennzeichnet, dass** aus mehreren ausgewählten, äquidistanten Eingangslaserpulsen (5) Bursts (17₁, 17₂, 17₃) erzeugt und zwischen die Burstpulse (17₁, 17₂, 17₃) jeweils ein Energiebilanzopferburst (19) und ggf. ein Opferburst (20) eingefügt werden, die insbesondere jeweils die gleiche Anzahl an Laserpulsen und/oder den gleichen Pulsabstand wie im eigentlichen Burst (17₁, 17₂, 17₃) aufweisen.

11. Lasersystem (1) zum Erzeugen verstärkter Ausgangslaserpulse (2₁, 2₂, 2₃) mit individuell vorgegebenen Pulsenergien zu individuell vorgegebenen Zeitpunkten (t₁, t₂, t₃) an einem Ausgang (3),
mit einer Pulsquelle (4) zum Erzeugen von Eingangslaserpulsen (5) mit der gleichen Pulsenergie und insbesondere dem gleichen zeitlichen Pulsabstand (Δt), welcher kleiner als der zeitliche Pulsabstand (ΔT₁, ΔT₂) zwischen zwei benachbarten Ausgangslaserpulsen (2₁, 2₂, 2₃) ist,
mit einer Auswahleinheit (6) zum Auswählen einiger der Eingangslaserpulse (5),
mit einem optischen Verstärker (8) zum Verstärken der ausgewählten Eingangslaserpulse (5₁, 5₂, 5₃),
mit einer Auskoppeleinheit (9) zum Auskoppeln zumindest eines Teils der verstärkten Laserpulse (5'₁, 5'₂, 5'₃, 12', 13'), und
mit einer Steuereinheit (10), die programmiert ist, die Auswahleinheit (6) und die Auskoppeleinheit (9) gemäß dem Verfahren nach einem der vorhergehenden Ansprüche zeitlich anzusteuern.

12. Lasersystem nach Anspruch 11, **gekennzeichnet durch** eine Fremdpulsquelle (15), insbesondere mit einer anderen Wellenlänge (λ₂) als die Pulsquelle (4), zum Erzeugen eines in die Pulsfolge der ausgewählten Eingangslaserpulse (5₁, 5₂, 5₃) einzufügenden Opfer- und/oder Energiebilanzopferlaserpulses (12, 13).

13. Lasersystem nach Anspruch 11 oder 12, **dadurch gekennzeichnet, dass** der Auskoppeleinheit (9) ein wellenlängenselektives Element (16) zum Auskoppeln von Laserlicht mit einer anderen Wellenlänge (λ₂) als die Pulsquelle (4) vorgeordnet oder nachgeordnet ist.

14. Steuerungsprogrammprodukt, welches Codemittel aufweist, die zum Durchführen aller Schritte des Verfahrens nach einem der Ansprüche 1 bis 10 angepasst sind, wenn das Programm auf einer Steuereinheit (10) eines Lasersystems (1) nach einem der Ansprüche 11 bis 13 abläuft.

## Claims

1. A method for generating amplified output laser pulses (2₁, 2₂, 2₃) with individually specified pulse energies at individually specified time points (t₁, t₂, t₃) at an output (3), comprising the following method steps:
- providing a pulse sequence of input laser pulses (5) with the same pulse energy and in particular with the same temporal pulse distance (Δt), which is smaller than the temporal pulse distance (ΔT₁, ΔT₂) between two neighboring output laser pulses (2₁, 2₂, 2₃);
- selecting the input laser pulses (5₁, 5₂, 5₃) that arrive at the output (3) in each case at the specified time points (t₁, t₂, t₃) or closest to the specified time points (t₁, t₂, t₃);
- amplifying the selected input laser pulses (5₁, 5₂, 5₃) using an optical amplifier (8) having a specified, amplification-free minimum time period (Tₘᵢₙ) and a specified, amplification-free maximum time period (Tₘₐₓ),
- coupling in an energy balance sacrificial laser pulse (13) with variable pulse energy at a temporal distance (T_{mod}) of less than the maximum time period (Tₘₐₓ) before at least one, in particular each, input laser pulse (5₁, 5₂, 5₃) that is to be amplified,
- for the case that the temporal pulse distance (ΔT₁) between two successive input laser pulses (5₁, 5₂) that are to be amplified is greater than the maximum time period (Tₘₐₓ), inserting at least one sacrificial laser pulse (12), which is spaced apart from the subsequent input pulse (5₂) that is to be amplified by at most the maximum time period (Tₘₐₓ), in particular by the maximum time period (Tₘₐₓ), before the subsequent one of the two successive input laser pulses (5₁, 5₂) that are to be amplified, into the pulse sequence of the selected input laser pulses (5₁, 5₂, 5₃); and
- coupling out the amplified sacrificial and energy balance sacrificial laser pulses (12', 13`) from the pulse sequence of the amplified input laser pulses (5'₁, 5'₂, 5'₃) upstream of the output (3), so as to obtain the output laser pulses (2₁, 2₂, 2₃) at the output (3) at the specified time points (t₁, t₂, t₃),
wherein the pulse energy of the energy balance sacrificial laser pulse (13) is selected in dependence on the temporal distance between the input laser pulse (5₃, 5₂) that is to be amplified and directly follows the energy balance sacrificial laser pulse (13) and the directly preceding input laser pulse (5₂) or sacrificial laser pulse (12) to be amplified in order to obtain the output laser pulses (2₁, 2₂, 2₃) with the specified pulse energies at the output (3).

2. The method as claimed in claim 1, **characterized in that** the expected pulse energy of the amplified output laser pulses (2₁, 2₂, 2₃) is determined in advance for the selected input laser pulses (5₁, 5₂, 5₃), and the pulse energy of the energy balance sacrificial laser pulses (13) is controlled on the basis of a comparison between the expected pulse energy and the specified pulse energy.

3. The method as claimed in claim 2, **characterized in that** the expected pulse energy is determined from the simulated behavior of the amplifier (10) in dependence on the pulse distance and pulse energy of the selected input laser pulses (5₁, 5₂, 5₃) and a pump power of the amplifier (8).

4. The method as claimed in one of the preceding claims, **characterized in that** all the amplified output laser pulses (2₁, 2₂, 2₃) have the same pulse energy.

5. The method as claimed in one of the preceding claims, **characterized in that**, instead of a selected input laser pulse (5), the temporal pulse distance of which from the immediately preceding, selected input laser pulse is smaller than the minimum time period (Tₘᵢₙ), a different input laser pulse (5) is selected, the temporal pulse distance of which from the immediately preceding, selected input laser pulse (5) is the same as or minimally greater than the minimum time period (Tₘᵢₙ).

6. The method as claimed in one of the preceding claims, **characterized in that** one of the input laser pulses (5) is inserted into the pulse sequence of the selected input laser pulses (5₁, 5₂, 5₃) as a sacrificial and/or energy balance sacrificial laser pulse (12, 13).

7. The method as claimed in one of claims 1 to 5, **characterized in that** an external laser pulse having in particular a different wavelength (λ₂) than the wavelength (λ₁) of the input laser pulses (5) is inserted into the pulse sequence of the selected input laser pulses (5₁, 5₂, 5₃) as a sacrifical and/or energy balance sacrificial laser pulse (12, 13).

8. The method as claimed in one of the preceding claims, **characterized in that** the temporal pulse distance (ΔT₁, ΔT₂) between two neighboring output laser pulses (2₁, 2₂, 2₃) is greater by at least one order of magnitude than the temporal pulse distance (ΔT) of the input laser pulses (5).

9. The method as claimed in one of the preceding claims, **characterized in that** at least one sacrificial laser pulse (12, 15) is inserted into the pulse sequence of the selected input laser pulses (5₁, 5₂, 5₃) before the first selected input laser pulse (5₁).

10. The method as claimed in one of the preceding claims, **characterized in that** bursts (17₁, 17₂, 17₃) are generated from a plurality of selected, equidistant input laser pulses (5) and an energy balance sacrificial burst (19) and, if necessary, a sacrificial burst (20) are inserted in each case between the burst pulses (17₁, 17₂, 17₃), said sacrificial bursts each having in particular the same number of laser pulses and/or the same pulse distance as in the actual burst (17₁, 17₂, 17₃).

11. A laser system (1) for generating amplified output laser pulses (2₁, 2₂, 2₃) with individually specified pulse energies at individually specified time points (t₁, t₂, t₃) at an output (3), comprising
a pulse source (4) for generating input laser pulses (5) with the same pulse energy and in particular with the same temporal pulse distance (Δt), which is smaller than the temporal pulse distance (ΔT₁, ΔT₂) between two neighboring output laser pulses (2₁, 2₂, 2₃),
a selection unit (6) for selecting some of the input laser pulses (5),
an optical amplifier (8) for amplifying the selected input laser pulses (5₁, 5₂, 53),
an output coupling unit (9) for coupling out at least one portion of the amplified laser pulses (5'₁, 5'₂, 5'₃, 12', 13') and
a control unit (10), which is programmed to temporally drive the selection unit (6) and the output coupling unit (9) according to the method as claimed in one of the preceding claims.

12. The laser system as claimed in claim 11, **characterized by** an external pulse source (15), in particular having a different wavelength (λ₂) than the pulse source (4), for generating a sacrificial and/or energy balance sacrificial laser pulse (12, 13) that is to be inserted into the pulse sequence of the selected input laser pulses (5₁, 5₂, 5₃).

13. The laser system as claimed in claim 11 or 12, **characterized in that** a wavelength-selective element (16) for coupling out laser light having a different wavelength (λ₂) than the pulse source (4) is arranged upstream or downstream of the output coupling unit (9).

14. A control program product having code means adapted to carry out all the steps of the method as claimed in one of claims 1 to 10 when the program is executed on a control unit (10) of a laser system (1) according to one of the claims 11 to 13.

## Revendications

1. Procédé de génération d'impulsions laser de sortie (2₁, 2₂, 2₃) amplifiées avec des énergies d'impulsion prédéfinies individuellement à des instants prédéfinis individuellement (t₁, t₂, t₃) au niveau d'une sortie (3), comprenant les étapes de procédé ci-dessous consistant à :
- fournir une séquence d'impulsion d'impulsions laser d'entrée (5) avec la même énergie d'impulsion et en particulier avec le même intervalle temporel d'impulsion (Δt), qui est inférieur à l'intervalle temporel d'impulsion (ΔT₁, ΔT₂) entre deux impulsions laser de sortie (2₁, 2₂, 2₃) consécutives ;
- sélectionner les impulsions laser d'entrée (5₁, 5₂, 5₃) parvenant au niveau de la sortie (3) respectivement aux instants (t₁, t₂, t₃) prédéfinis ou à des instants les plus proches des instants prédéfinis (t₁, t₂, t₃) ;
- amplifier les impulsions laser d'entrée (5₁, 5₂, 5₃) sélectionnées au moyen d'un amplificateur optique (8) présentant une durée minimale sans gain (Tₘᵢₙ) prédéfinie et une durée maximale sans gain (Tₘₐₓ) prédéfinie,
- coupler une impulsion laser sacrificielle de bilan énergétique (13), dont l'énergie d'impulsion est variable, dans un intervalle temporel (T_{mod}) inférieur à la durée maximale (Tₘₐₓ) avant au moins une, en particulier chaque, impulsion laser d'entrée (5₁, 5₂, 5₃) à amplifier,
- dans le cas où l'intervalle temporel d'impulsion (ΔT₁) entre deux impulsions laser d'entrée (5₁, 5₂) à amplifier successives est supérieur à la durée maximale (Tₘₐₓ), insérer, au sein de la séquence d'impulsion des impulsions laser d'entrée (5₁, 5₂, 5₃) sélectionnées et avant l'impulsion venant en second parmi les deux impulsions laser d'entrée (5₁, 5₂) à amplifier successives, au moins une impulsion laser sacrificielle (12) espacée d'au plus la durée maximale (Tₘₐₓ), en particulier espacée de la durée maximale (Tₘₐₓ), par rapport à l'impulsion d'entrée (5₂) à amplifier suivante ; et
- découpler les impulsions laser sacrificielles et les impulsions laser sacrificielles de bilan énergétique (12', 13') amplifiées avant la sortie (3) à partir de la séquence d'impulsion des impulsions laser d'entrée (5'₁, 5'₂, 5'₃) amplifiées afin d'obtenir en sortie (3) les impulsions laser de sortie (2₁, 2₂, 2₃) aux instants (t₁, t₂, t₃) prédéfinis, l'énergie d'impulsion de l'impulsion laser sacrificielle de bilan énergétique (13) étant sélectionnée en fonction de l'intervalle temporel entre l'impulsion laser d'entrée (5₃, 5₂) à amplifier succédant immédiatement à l'impulsion laser sacrificielle de bilan énergétique (13) et l'impulsion laser d'entrée (5₂) ou l'impulsion laser sacrificielle (12) à amplifier immédiatement précédente, afin d'obtenir en sortie (3) les impulsions laser de sortie (2₁, 2₂, 2₃) avec les énergies d'impulsion prédéfinies.

2. Procédé selon la revendication 1, **caractérisé en ce que**, pour les impulsions laser d'entrée (5₁, 5₂, 5₃) sélectionnées, l'énergie d'impulsion attendue des impulsions laser de sortie (2₁, 2₂, 2₃) amplifiées est déterminée à l'avance et l'énergie d'impulsion des impulsions laser sacrificielles de bilan énergétique (13) est commandée sur la base d'une comparaison entre l'énergie d'impulsion attendue et l'énergie d'impulsion prédéfinie.

3. Procédé selon la revendication 2, **caractérisé en ce que** l'énergie d'impulsion attendue est déterminée à partir du comportement simulé de l'amplificateur (10) en fonction de l'intervalle d'impulsion et de l'énergie d'impulsion des impulsions laser d'entrée (5₁, 5₂, 5₃) sélectionnées et d'une puissance de pompage de l'amplificateur (8).

4. Procédé selon l'une quelconque des revendications précédentes, **caractérisé en ce que** toutes les impulsions laser de sortie (2₁, 2₂, 2₃) amplifiées présentent la même énergie d'impulsion.

5. Procédé selon l'une quelconque des revendications précédentes, **caractérisé en ce qu'**une impulsion laser d'entrée (5) différente, dont l'intervalle temporel d'impulsion par rapport à l'impulsion laser d'entrée (5) sélectionnée immédiatement précédente est égale ou immédiatement supérieure à la durée minimale (Tₘᵢₙ), est sélectionnée à la place d'une impulsion laser d'entrée (5) sélectionnée dont l'intervalle temporel d'impulsion par rapport à l'impulsion laser d'entrée sélectionnée immédiatement précédente est inférieure à la durée minimale (Tₘᵢₙ)

6. Procédé selon l'une quelconque des revendications précédentes, **caractérisé en ce qu'**une des impulsions laser d'entrée (5) est insérée dans la séquence d'impulsion des impulsions laser d'entrée (5₁, 5₂, 5₃) sélectionnées en tant qu'impulsion laser sacrificielle et/ou en tant qu'impulsion laser sacrificielle de bilan énergétique (12, 13).

7. Procédé selon l'une quelconque des revendications 1 à 5, **caractérisé en ce qu'**une impulsion laser externe présentant en particulier une longueur d'onde (λ₂) différente de la longueur d'onde (λ₁) des impulsions laser d'entrée (5) est insérée dans la séquence d'impulsion des impulsions laser d'entrée (5₁, 5₂, 5₃) sélectionnées en tant qu'impulsion laser sacrificielle et/ou en tant qu'impulsion laser sacrificielle de bilan énergétique.

8. Procédé selon l'une quelconque des revendications précédentes, **caractérisé en ce que** l'intervalle temporel d'impulsion (ΔT₁, ΔT₂) entre deux impulsions laser de sortie (2₁, 2₂, 2₃) consécutives est supérieur d'au moins un ordre de grandeur à l'intervalle temporel d'impulsion (Δt) des impulsions laser d'entrée (5).

9. Procédé selon l'une quelconque des revendications précédentes, **caractérisé en ce qu'**au moins une impulsion laser sacrificielle (12, 15) est insérée dans la séquence d'impulsion des impulsions laser d'entrée (5₁, 5₂, 5₃) sélectionnées avant la première impulsion laser d'entrée (5₁) sélectionnée.

10. Procédé selon l'une quelconque des revendications précédentes, **caractérisé en ce que** des rafales (17₁, 17₂, 17₃) sont générées à partir de plusieurs impulsions laser d'entrée (5) sélectionnées équidistantes, et respectivement une rafale sacrificielle de bilan énergétique (19) et le cas échéant une rafale sacrificielle (20), qui présentent en particulier respectivement le même nombre d'impulsions laser et/ou le même intervalle d'impulsion que dans la rafale (17₁, 17₂, 17₃) intrinsèque, sont insérées entre les impulsions de rafale (17₁, 17₂, 17₃).

11. Système laser (1) permettant de générer des impulsions laser de sortie (2₁, 2₂, 2₃) amplifiées au niveau d'une sortie (3) avec des énergies d'impulsions prédéfinies individuellement à des instants (t₁, t₂, t₃) prédéfinis individuellement,
avec une source d'impulsions (4) permettant de générer des impulsions laser d'entrée (5) avec la même énergie d'impulsion et en particulier avec le même intervalle temporel d'impulsion (Δt), qui est inférieur à l'intervalle temporel d'impulsion (ΔT₁, ΔT₂) entre deux impulsions laser de sortie (2₁, 2₂, 2₃) consécutives,
avec une unité de sélection (6) permettant de sélectionner certaines des impulsions laser d'entrée (5),
avec un amplificateur optique (8) permettant d'amplifier les impulsions laser d'entrée (5₁, 5₂, 5₃) sélectionnées,
avec une unité de découplage (9) permettant de découpler au moins une partie des impulsions laser (5'₁, 5'₂, 5'₃, 12', 13') amplifiées, et
avec une unité de commande (10) programmée pour commander temporellement l'unité de sélection (6) et l'unité de découplage (9) selon le procédé selon l'une quelconque des revendications précédentes.

12. Système laser selon la revendication 11, **caractérisé par** une source d'impulsions externe (15), en particulier présentant une longueur d'onde (λ₂) différente de celle de la source d'impulsions (4), permettant de générer une impulsion laser sacrificielle et/ou une impulsion laser sacrificielle de bilan énergétique (12, 13) à insérer dans la séquence d'impulsion des impulsions laser d'entrée (5₁, 5₂, 5₃) sélectionnées.

13. Système laser selon la revendication 11 ou 12, **caractérisé en ce qu'**un élément à sélection de longueur d'onde (16) permettant de découpler la lumière laser présentant une longueur d'onde (λ₂) différente de celle de la source d'impulsions (4) est agencé en amont ou en aval de l'unité de découplage (9).

14. Produit-programme de commande présentant des moyens de codage appropriés pour mettre en oeuvre toutes les étapes du procédé selon l'une quelconque des revendications 1 à 10 lorsque le programme est exécuté sur une unité de commande (10) d'un système laser (1) selon l'une quelconque des revendications 11 à 13.
